# EUROPEAN PATENT SPECIFICATION

(11) **EP 3 736 141 B1**
(45) Date of publication and mention of the grant of the patent: **23.02.2022**
(21) Application number: 20173498.5
(22) Date of filing: 07.05.2020
(51) Int. Cl.: B60C 9/20, B60C 9/18

(54) **RADIAL TIRE**
RADIALREIFEN
PNEU RADIAL

(30) Priority: 09.05.2019 US 201916407334
(43) Date of publication of application: 11.11.2020
(73) Proprietor: The Goodyear Tire & Rubber Company, Akron, OH 44316 (US)
(72) Inventor: UEYOKO, Kiyoshi, Copley, OH 44321 (US); REITER, Leonard James, Ravenna, OH 44266 (US)
(74) Representative: Goodyear IP Law

(56) References cited:
- EP-A1- 1 477 333
- JP-A- H04 103 404
- JP-A- 2006 103 425
- JP-A- 2011 121 439
- US-A- 4 934 428

## Description

### Field of the Invention

The present invention relates to a radial tire and to a method of producing such a radial tire, and more particularly, to a radial tire and a method of producing the radial tire, which is suitable for an aircraft.

### Background of the Invention

Conventional radial tires, especially aircraft radial tires, have a relatively large growth of a tread surface in its radial direction by high internal pressure and centrifugal force caused by high speed rotation. If the tread surface grows outward in the radial direction, tread rubber may be expanded in a circumferential direction of the tire. If the conventional tire is non-pneumatic, the large growth may be caused by only the high-speed rotation.

Generally, conventional aircraft radial tires are often used under conditions of high internal pressure, high load, and high speed. When the tire rides over foreign object, the aircraft radial tire may be damaged when the entire tire rides over the foreign object, e. g., so-called "enveloping properties". When the tread rubber of the tire is expanded in the circumferential direction, a resistance force against the foreign object may be weak. Further, such trampled foreign object may easily enter the tread and thereby damage the tire.

When an amount of growth of the central portion of the tire in its widthwise direction becomes greater than opposite ends of the tire in the widthwise direction, a diameter difference of the tire may be generated. This diameter difference may cause a drag phenomenon to the rotating tire. As a result, the shoulder portion of the tread may wear sooner than the central portion of the tread thereby shortening the life of the tread and the tire. This phenomenon is called deviated wear.

In order to improve the wearing characteristics of the tread by suppressing the growing deformation thereof, to enhance the wearing characteristics of the tread, and to enhance the enveloping properties of the tread, conventional radial tires often include a belt layer disposed between a tread rubber layer and a crown region of a carcass layer. The belt layer may include a conventional main belt layer with a wide belt ply and a narrower auxiliary belt layer with a narrower belt ply added on a radially outer periphery of the main belt layer. This structure may thus enhance belt rigidity with the auxiliary belt layer disposed on a central portion of the main belt layer. Further, this structure may restrain growing deformation of the tread central region.

Conventional structures for reducing growth may use a cord with relatively high elasticity made of aromatic polyamide (e.g., Kevlar ^{™}). As compared with an aliphatic polyamide (e.g., Nylon), which is conventionally used for an aircraft tire, the aromatic polyamide cord exhibit higher tension in a low elongation percentage region and maintain the internal pressure of the tire, thereby effectively suppressing the growth of the tire.

Conventionally, reinforcing layers may include cords reinforced by glass, metal, aramid, or the like provided at an outermost layer of a belt made of organic fiber. A belt ply having higher tension may further be added. Such a layer may necessarily use a rubber thickness (thickness of rubber only with thickness of cord not included) in the tread central region where the total thickness of the belt layer becomes most thick. Rubber thickness of the tread side regions may thereby become excessively thick, thus, increasing the tire weight, increasing the heating of the tread side regions, and lowering the high-speed endurance of the tread.

In view of the above, it is an object of the present invention to provide a radial tire suitable for an aircraft in which a diameter of the tread surface is prevented from being increased during rotation, endurance against cutting occurred by foreign object or the like is enhanced, and the weight of the tire is relatively low or reduced. The aircraft tire should thus allow to mitigate cutting of the aircraft tire by foreign object and the like while having a low or reduced weight. Also, the tire should show improved retreadability.

EP 1 477 333 A1, US 4,934,428 A and JP 2001 121 439 A each disclose a tire in accordance with the preamble of claim 1.

JP 2006 103 425 A describes an aircraft tire with a tread having a tread cap layer and a tread base layer.

JP H04 103 404 describes a tire with a very thick tread and a belt layer.

### Definitions

"Axial" and "axially" refer to lines or directions that are parallel to the axis of rotation of the tire.

"Belt package " means at least two annular layers or plies of preferably parallel cords, woven or unwoven, underlying the tread, unanchored to the bead, and having cords preferably inclined respect to the equatorial plane of the tire. The belt structure may also include plies of parallel cords inclined at relatively low angles, acting as restricting layers.

"Carcass" means the tire structure apart from the belt package, tread, undertread, and sidewall rubber over the plies, but including the beads.

"Circumferential" and "circumferentially" mean lines or directions extending along the perimeter of the surface of the annular tire parallel to the equatorial plane (EP) and perpendicular to the axial direction.

"Cord" means one of the reinforcement strands which the reinforcement structures of the tire comprise.

"Cord angle" means the acute angle, left or right, in a plan view of the tire, formed by a cord with respect to the equatorial plane. The "cord angle" is measured in a cured but uninflated tire.

"Equatorial plane (EP)" means the plane perpendicular to the tire's axis of rotation and passing through the center of its tread.

"Footprint" means the contact patch or area of contact of the tire tread with a flat surface at zero speed and under normal load and pressure.

"Lateral" means an axial direction.

"Normal load" means the specific design inflation pressure and load assigned by the appropriate standards organization for the service condition for the tire.

"Ply" means a cord-reinforced layer of rubber-coated radially deployed or otherwise parallel cords.

"Radial" and "radially" mean directions radially toward or away from the axis of rotation of the tire.

"Radial ply structure" means the one or more carcass plies or which at least one ply has reinforcing cords oriented at an angle of between 65° and 90° with respect to the equatorial plane of the tire.

"Radial ply tire" means a belted or circumferentially restricted tire in which at least one ply has cords which extend from bead to bead are laid at cord angles between 65° and 90° with respect to the equatorial plane of the tire.

### Summary of the Invention

The invention relates to a radial tire in accordance with claim 1. Preferably, the tire is an aircraft tire.

Dependent claims refer to preferred embodiments of the invention.

A radial tire in accordance with a preferred aspect of the present invention includes a pair of bead cores, a carcass layer having one or more carcass plies extending from one of the bead cores to another of the bead cores in a toroidal form, a tread portion circumferentially encircling the toroidal form of the carcass layer, and a belt layer having a main belt layer, a first, unreinforced cushion layer disposed on a radially outer side of the main belt layer, a protective belt layer disposed on a radially outer side of the first cushion layer, and a second, unreinforced cushion layer disposed on a radially outer side of the protective belt layer and a radially inner side of the tread portion. The first, unreinforced cushion layer has a radial thickness between 2.0 mm and 10.0 mm, or between 4.6 mm and 10.0 mm. The second, unreinforced cushion layer has a radial thickness between 1.0 mm and 4.0 mm.

According to another preferred aspect of the radial tire, the main belt layer has a plurality of organic fiber, merged cords.

According to still another preferred aspect of the radial tire, the protective belt layer has a plurality of organic fiber cords.

According to still another preferred aspect of the radial tire, the carcass layer includes a merged cord including aromatic polyamide fiber and aliphatic polyamide fiber.

According to yet another preferred aspect of the radial tire, the main belt layer has a first axial width and the protective belt layer has a second axial width, a ratio of the second axial width to the first axial width being between 0.70 and 0.95.

According to still another preferred aspect of the radial tire, an organic fiber cord of the main belt ply has an angle of inclination between 10 degrees and 45 degrees with respect to an equatorial plane of the radial tire.

According to yet another preferred aspect of the radial tire, an organic fiber cord of the protective belt layer has an angle of inclination between 0 degrees and 25 degrees with respect to an equatorial plane of the radial tire.

According to still another preferred aspect of the radial tire, an organic fiber cord of the main belt layer has a first angle of inclination with respect to an equatorial plane of the radial tire, an organic fiber cord of the protective belt layer has a second angle of inclination with respect to the equatorial plane of the radial tire, and the first angle is greater than the second angle.

According to yet another preferred aspect of the radial tire, an organic fiber cord of the main belt layer includes aramid and an organic fiber cord of the protective belt layer includes nylon.

A belt layer or belt package, in accordance with a preferred aspect of the present invention, for a radial tire, includes a main belt layer, a first, unreinforced cushion layer disposed on a radially outer side of the main belt layer, a protective belt layer disposed on a radially outer side of the first cushion layer; and a second, unreinforced cushion layer disposed on a radially outer side of the protective belt layer and a radially inner side of a tread portion. The first, unreinforced cushion layer has a radial thickness between 3.0 mm and 10.0 mm, or between 6.0 mm and 10.0 mm.

According to a preferred aspect of the belt layer, an organic fiber cord of the protective belt layer has an angle of inclination between 0 degrees and 15 degrees with respect to an equatorial plane of the radial tire.

According to still another preferred aspect of the belt layer, an organic fiber cord of the main belt layer has a first angle of inclination with respect to an equatorial plane of the radial tire, an organic fiber cord of the protective belt layer has a second angle of inclination with respect to the equatorial plane of the radial tire, and the first angle is equal to the second angle.

According to yet another preferred aspect of the belt layer, an organic fiber cord of the main belt layer includes aramid and an organic fiber cord of the protective belt layer includes nylon.

### Brief Description of the Drawings

The present invention will be described by way of example and with reference to the accompanying drawings, in which:
FIG. 1 is a sectional view of a pneumatic radial tire according to the present invention.

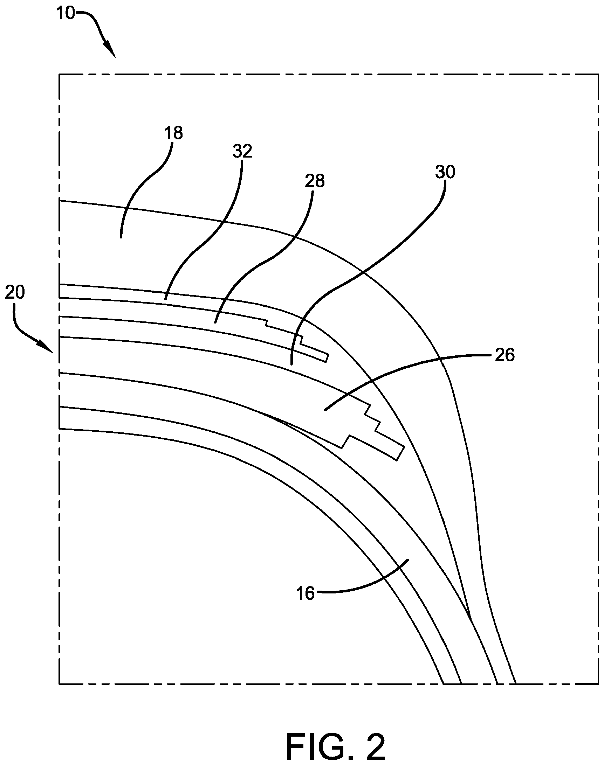

FIG. 2 is a detail view of the pneumatic radial tire of FIG. 1.

### Description of Example Embodiments of the Present Invention

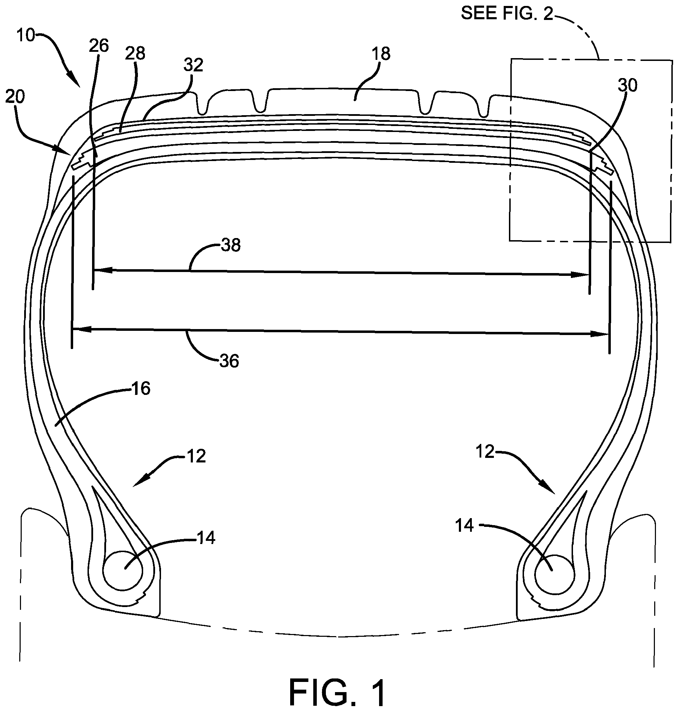

Examples for carrying out the present invention will be described with reference to FIG. 1 below. An example aircraft radial tire 10 has a bead portion 12 with two bead cores 14, each having a circular cross section. A carcass layer 16 preferably includes six or more example carcass plies (not shown) in which rubber-coated organic fiber cords are preferably arranged in a radial direction and retained by the bead cores 14. Note that other structures, such as a flipper, a chafer, a chipper, etc., similar to conventional tires or aircraft tires may be present and are not illustrated in FIG. 1.

The carcass layer 16 preferably utilizes an example organic fiber cord having a tensile fracture strength of 6.3 cN/dtex or higher, an elongation percentage of 0.2 to 1.8 percent when a load is 0.2 cN/dtex in the elongating direction, an elongation percentage of 1.4 to 6.4 percent when a load is 1.0 cN/dtex in the elongating direction, and an elongation percentage of 2.1 to 8.6 percent when a load is 2.9 cN/dtex in the elongating direction.

The organic fiber cord of the carcass layer 16 preferably is an aromatic polyamide fiber. It preferably has an inner-layer coefficient of 0.12 to 0.85, or 0.17 to 0.51, and an outer-layer coefficient of 0.4 to 0.85.

In another embodiment, the carcass layer 16 utilizes another example organic fiber cord having a tensile fracture strength of 6.3 cN/dtex or higher, an elongation percentage of 0.2 to 2.0 percent when a load is 0.3 cN/dtex in the elongating direction, an elongation percentage of 1.5 to 7.0 percent when a load is 2.1 cN/dtex in the elongating direction, and an elongation percentage of 2.2 to 9.3 percent when a load is 3.2 cN/dtex in the elongating direction.

The organic fiber cord of the carcass layer 16 preferably is an aromatic polyamide fiber with an inner-layer coefficient of 0.12 to 0.85, or 0.17 to 0.51, and an outer-layer coefficient of 0.4 to 0.85.

The organic fiber cord of the carcass layer 16 is preferably a merged, or hybrid, cord. The merged or hybrid cord preferably includes aromatic polyamide fiber and aliphatic polyamide fiber. The weight ratio of the aromatic polyamide fiber and the aliphatic polyamide fiber is preferably from 100:27 to 100:255. Additionally, nylon may be used for part or all of the merged cord.

The belt layer or belt package 20 includes a main belt layer 26 disposed on a radially inner side of the belt package 20 and a protective belt layer 28 provided on a radially outer side of the belt package 20.

In one embodiment, the main belt layer 26 has a first axial width 36 which is larger than the second axial width 38 of the protective belt layer 28.

Preferably, the ratio of the second axial width and the first axial width is between 0.70 and 0.95, more preferably 0.85 to 0.95.

Preferably, the main belt layer 26 is formed of a plurality of belt plies, preferably from 2 to 16 or from 6 to 12 such as 8.

The widths of the different belt plies in the main belt layer 26 may be the same as each other or varying widths.

In one embodiment, the main belt layer 26 comprises organic fiber cord.

The inclination angle of the organic fiber cord in the main belt layer 26, or the cord angle, is preferably between 1 and 45 degrees, or 10 and 45 degrees, with respect to the equatorial plane of the tire 10.

The density of multiple organic fiber cords in the main belt layer 26 is preferably in a range of from 4.0 cords/10 mm to 10.0 cords/10 mm such as 7.0 cords/10 mm.

The organic fiber cord(s) of the main belt layer 26 of the belt package 20 is preferably merged, or hybrid, cord. In one embodiment, the merged or hybrid cord includes aromatic polyamide fiber and aliphatic polyamide fiber. The weight ratio of the aromatic polyamide fiber and the aliphatic polyamide fiber is preferably from 100:27 to 100:255. Additionally, nylon may be used for part or all of the example merged cord.

In another embodiment, the protective belt layer 28 of the belt package 20 may have an axial width wider than the axial width of the main belt layer 26, preferably 101 to 108 percent such as 103 percent of the axial width of the main belt layer 26.

The protective belt layer 28 is preferably formed of one or more belt plies such 1, 2 or 3 belt plies. In a preferred embodiment, one belt ply is used.

Preferably, the belt ply or the belt plies of the protective belt layer 28 are formed with one or more organic fiber cords coated with rubber to form band-like thin bodies wound such that, whenever the thin bodies are wound once, or 360º, the thin bodies may reciprocate between both axial ends of the ply or plies and the thin bodies may be inclined at an angle in a range of from 0 to 25 degrees, preferably 0.5 to 10 degrees or 1 to 5 degrees, with respect to the equatorial surface, and this winding may be carried out many times while offsetting the thin bodies as substantially the same distance as their widths in the circumferential direction such that no gap is generated between the thin bodies. This is called endless zigzag-wound belt and is explained in further details in US 7,712,499. As a result, the organic fiber cord(s), extending in substantially the circumferential direction in a zigzag manner, may be embedded in the entire region of the belt ply or plies substantially uniformly by changing the bending direction at the both axial ply ends.

The angle of the organic fiber cord(s) of the main belt layer 26 are preferably less than the angle of the organic fiber cord(s) of the protective layer 28.

In the protective belt layer 28, the organic fiber cord(s) preferably have an elastic modulus equal to or less than that of the elastic modulus of the organic fiber cords included in the main belt layer 26.

Example organic fiber cords for the protective layer 28 include an aliphatic polyamide fiber, such as nylon, or a merged cord with an aromatic polyamide fiber, such as aramid, and an aliphatic polyamide fiber, such as nylon. The protective layer 28 preferably includes an endless zigzag-wound belt having an inclination angle of the organic fiber cord being in a range of 0 to 25 degrees with respect to the equatorial plane, or an angle of 1, 3, 5 or 10 degrees.

The minimum thickness of a first, unreinforced (i.e. lacking cord reinforcement) rubber layer 30, or first cushioning layer, between the main belt layer 26 and the protective layer 28 is preferably in a range of from 2.0 mm to 10.0 mm, more preferably of from 3 mm to 6 mm or from 4.6 mm to 10.0 mm, such as 4.5 mm. The thickness is measured at each respective location of the first rubber layer 30 in the direction perpendicular to the first rubber layer 30.

In one embodiment, the first, unreinforced rubber layer 30 may comprise multiple layers with an overall thickness within the above ranges.

Tread buffing during tire retreading may occur at the first rubber layer 30.

The thickness of a second, unreinforced (i.e. lacking cord reinforcement) rubber layer 32, or second cushioning layer, between the protective layer 28 and a tread layer 18 is in a range of from 1.0 mm to 4.0 mm, preferably of from 1.5 to 2.5 mm such as 2.0 mm. The thickness is measured at each respective location of the second rubber layer 32 in the direction perpendicular to the first rubber layer 32.

In one embodiment, the second, unreinforced rubber layer 32 may comprise multiple layers with an overall thickness within the above ranges.

If the thickness of the first rubber layer 30 is too small, when retreading the tire 10, it may become difficult to remove the rubber layers 30 without damaging the inner main belt layer 26.

Conversely, if the thickness of the first and second rubber layers 30, 32 is too large, not only the weight of the tire increases, but also heat generation of the tread layer 18 increases, which are both disadvantageous for the performance of the tire 10.

The thickness of the first rubber layer 30 is such that it allows removal of the protective layer 28 during retread operations.

## Claims

1. A radial tire comprising a pair of bead cores (14), at least one a carcass layer (16) having one or more carcass plies extending from one of the bead cores (14) to the other bead core (14) in a toroidal form, a tread portion or tread layer (18) at least partially circumferentially encircling the toroidal form of the carcass layer (16), and a belt package (20) having a main belt layer (26), a first, unreinforced cushion layer (30) disposed on a radially outer side of the main belt layer (26), and a protective belt layer (28) disposed on a radially outer side of the first cushion layer (30), the first, unreinforced cushion layer (30) having a radial thickness in a range of from 2.0 mm to 10.0 mm, **characterized in that** the belt package (20) further comprises a second, unreinforced cushion layer (32) disposed on a radially outer side of the protective belt layer (28) and a radially inner side of the tread portion or tread layer (18), and **in that** the second cushion layer (32) has a thickness in a range of from 1.0 mm to 4.0 mm.

2. The radial tire as set forth in claim 1 wherein the main belt layer (26) has a plurality of organic fiber cords, preferably merged or hybrid cords, and/or wherein the protective belt layer (28) has a plurality of organic fiber cords, preferably merged or hybrid cords.

3. The radial tire as set forth in claim 1 or 2 wherein the second cushion layer (32) has a thickness in a range of from 1.5 mm to 2.5 mm and/or the first cushion layer (30) has a thickness or minimum thickness in a range of from 2.0 mm to 10.0 mm.

4. The radial tire as set forth in at least one of the previous claims wherein the carcass layer (16) has organic fiber cords.

5. The radial tire as set forth in at least one of the previous claims wherein the main belt layer (26) has a first axial width (36) and the protective belt layer (28) has a second axial width (38), a ratio of the second axial width to the first axial width being of from 0.70 to 0.95 or of from 0.75 to 0.95 or of from 0.85 to 0.95.

6. The radial tire as set forth in at least one of the previous claims 1 to 4 wherein the main belt layer (26) has a first axial width (36) and the protective belt layer (28) has a second axial width (38), a ratio of the second axial width to the first axial width being of from 1.01 to 1.08 or of from 1.01 to 1.05.

7. The radial tire as set forth in at least one of the previous claims wherein an organic fiber cord of the main belt ply (26) has an angle of inclination in a range of from 1 degree and 45 degrees with respect to the equatorial plane of the radial tire (10) and/or wherein an organic fiber cord of the protective belt layer (28) has an angle of inclination in a range of from 0 degrees to 25 degrees with respect to the equatorial plane of the radial tire (10).

8. The radial tire as set forth in at least one of the previous claims wherein an organic fiber cord of the main belt layer (26) has a first angle of inclination with respect to the equatorial plane of the radial tire (10), an organic fiber cord of the protective belt layer (28) has a second angle of inclination with respect to the equatorial plane of the radial tire (10), and wherein the first angle is greater than the second angle.

9. The radial tire as set forth in at least one of the previous claims wherein an organic fiber cord of the main belt layer (26) includes aramid and an organic fiber cord of the protective belt layer (28) includes nylon.

10. The radial tire as set forth in at least one of the previous claims wherein the carcass layer (16) comprises merged or hybrid cord including aromatic polyamide fiber and aliphatic polyamide fiber.

11. The radial tire as set forth in at least one of the previous claims wherein an organic fiber cord of the main belt ply (26) has an angle of inclination in a range of from 0 degrees to 25 degrees with respect to the equatorial plane of the radial tire (10).

12. The radial tire as set forth in at least one of the previous claims wherein an organic fiber cord of the protective belt layer (28) has an angle of inclination in a range of from 0 degrees to 20 degrees with respect to the equatorial plane of the radial tire (10).

13. The radial tire as set forth in at least one of the previous claims wherein an organic fiber cord of the main belt layer (26) has a first angle of inclination with respect to the equatorial plane of the radial tire (10), an organic fiber cord of the protective belt layer (28) has a second angle of inclination with respect to the equatorial plane of the radial tire (10), and the first angle is equal to the second angle.

14. The radial tire as set forth in at least one of the previous claims wherein the tire (10) is an aircraft tire.

15. The radial tire of claim 14 wherein the main belt layer (26) is formed of a plurality of belt plies, preferably from 2 to 16 or from 6 to 12 belt plies.

## Patentansprüche

1. Radialreifen, der Folgendes umfasst: ein Paar Wulstkerne (14), wenigstens eine Karkassenschicht (16), die eine oder mehrere Karkassenlagen, die sich von einem der Wulstkerne (14) zu dem anderen Wulstkern (14) in einer Torusform erstrecken, aufweist, ein Laufflächenabschnitt oder eine Laufflächenschicht (18), der/die die Torusform der Karkassenschicht (16) wenigstens teilweise umlaufend umgibt, und ein Gürtelpaket (20), das eine Hauptgürtelschicht (26), eine erste, unverstärkte Kissenschicht (30), die an einer radial äußeren Seite der Hauptgürtelschicht (26) angeordnet ist, und eine Schutzgürtelschicht (28), die an einer radial äußeren Seite der ersten Kissenschicht (30) angeordnet ist, aufweist, wobei die erste, unverstärkte Kissenschicht (30) eine radiale Stärke in einem Bereich von 2,0 mm bis 10,0 mm aufweist, **dadurch gekennzeichnet, dass** das Gürtelpaket (20) ferner eine zweite, unverstärkte Kissenschicht (32), die an einer radial äußeren Seite der Schutzgürtelschicht (28) und einer radial inneren Seite des Laufflächenabschnitts oder der Laufflächenschicht (18) angeordnet ist, umfasst, und dass die zweite Kissenschicht (32) eine Stärke in einem Bereich von 1,0 mm bis 4,0 mm aufweist.

2. Radialreifen nach Anspruch 1, wobei die Hauptgürtelschicht (26) mehrere Korde aus organischen Fasern, bevorzugt gemischte oder Hybridkorde aufweist, und/oder wobei die Schutzgürtelschicht (28) mehrere Korde aus organischen Fasern, bevorzugt gemischte oder Hybridkorde, aufweist.

3. Radialreifen nach Anspruch 1 oder 2, wobei die zweite Kissenschicht (32) eine Stärke in einem Bereich von 1,5 mm bis 2,5 mm aufweist und/oder die erste Kissenschicht (30) eine Stärke oder eine Minimalstärke in einem Bereich von 2,0 mm bis 10,0 mm aufweist.

4. Radialreifen nach wenigstens einem der vorhergehenden Ansprüche, wobei die Karkassenschicht (16) Korde aus organischen Fasern aufweist.

5. Radialreifen nach wenigstens einem der vorhergehenden Ansprüche, wobei die Hauptgürtelschicht (26) eine erste axiale Breite (36) aufweist und die Schutzgürtelschicht (28) eine zweite axiale Breite (38) aufweist, wobei ein Verhältnis von der zweiten axialen Breite zu der ersten axialen Breite von 0,70 bis 0,95 oder von 0,75 bis 0,95 oder von 0,85 bis 0,95 beträgt.

6. Radialreifen nach wenigstens einem der vorhergehenden Ansprüche 1 bis 4, wobei die Hauptgürtelschicht (26) eine erste axiale Breite (36) aufweist und die Schutzgürtelschicht (28) eine zweite axiale Breite (38) aufweist, wobei ein Verhältnis von der zweiten axialen Breite zu der ersten axialen Breite von 1,01 bis 1,08 oder von 1,01 bis 1,05 beträgt.

7. Radialreifen nach wenigstens einem der vorhergehenden Ansprüche, wobei ein Kord aus organischen Fasern der Hauptgürtellage (26) einen Neigungswinkel in einem Bereich von 1 Grad und 45 Grad in Bezug auf die Äquatorialebene des Radialreifens (10) aufweist und/oder wobei ein Kord aus organischen Fasern der Schutzgürtelschicht (28) einen Neigungswinkel in einem Bereich von 0 Grad bis 25 Grad in Bezug auf die Äquatorialebene des Radialreifens (10) aufweist.

8. Radialreifen nach wenigstens einem der vorhergehenden Ansprüche, wobei ein Kord aus organischen Fasern der Hauptgürtelschicht (26) einen ersten Neigungswinkel in Bezug auf die Äquatorialebene des Radialreifens (10) aufweist, ein Kord aus organischen Fasern der Schutzgürtelschicht (28) einen zweiten Neigungswinkel in Bezug auf die Äquatorialebene des Radialreifens (10) aufweist und wobei der erste Winkel größer als der zweite Winkel ist.

9. Radialreifen nach wenigstens einem der vorhergehenden Ansprüche, wobei ein Kord aus organischen Fasern der Hauptgürtelschicht (26) Aramid beinhaltet und ein Kord aus organischen Fasern der Schutzgürtelschicht (28) Nylon beinhaltet.

10. Radialreifen nach wenigstens einem der vorhergehenden Ansprüche, wobei die Karkassenschicht (16) einen gemischten oder Hybridkord, der aromatische Polyamidfaser und aliphatische Polyamidfaser beinhaltet, umfasst.

11. Radialreifen nach wenigstens einem der vorhergehenden Ansprüche, wobei ein Kord aus organischen Fasern der Hauptgürtellage (26) einen Neigungswinkel in einem Bereich von 0 Grad bis 25 Grad in Bezug auf die Äquatorialebene des Radialreifens (10) aufweist.

12. Radialreifen nach wenigsten einem der vorhergehenden Ansprüche, wobei ein Kord aus organischen Fasern der Schutzgürtelschicht (28) einen Neigungswinkel in einem Bereich von 0 Grad bis 20 Grad in Bezug auf die Äquatorialebene des Radialreifens (10) aufweist.

13. Radialreifen nach wenigstens einem der vorhergehenden Ansprüche, wobei ein Kord aus organischen Fasern der Hauptgürtelschicht (26) einen ersten Neigungswinkel in Bezug auf die Äquatorialebene des Radialreifens (10) aufweist, ein Kord aus organischen Fasern der Schutzgürtelschicht (28) einen zweiten Neigungswinkel in Bezug auf die Äquatorialebene des Radialreifens (10) aufweist und der erste Winkel gleich dem zweiten Winkel ist.

14. Radialreifen nach wenigstens einem der vorhergehenden Ansprüche, wobei der Reifen (10) ein Luftfahrzeugreifen ist.

15. Radialreifen nach Anspruch 14, wobei die Hauptgürtelschicht (26) aus mehreren Gürtellagen ausgebildet ist, bevorzugt von 2 bis 16 oder von 6 bis 12 Gürtellagen.

## Revendications

1. Bandage pneumatique du type à nappe radiale qui comprend une paire de tringles de talons (14), au moins une couche (16) faisant office de carcasse qui possède une ou plusieurs nappes de carcasse qui s'étend(ent) à partir d'une des tringles de talon (14) jusqu'à l'autre tringle de talon (14) sous une forme toroïdale, une portion faisant office de bande de roulement ou une couche faisant office de bande de roulement (18) qui encercle au moins en partie dans la direction circonférentielle la forme toroïdale de la couche de carcasse (16), et un paquet de ceintures (20) qui possède une couche principale (26) sous la forme d'une ceinture, une première couche non renforcée (30) faisant office de rembourrage qui est disposée sur un côté externe dans la direction radiale de la couche principale (26) sous la forme d'une ceinture, et une couche de protection (28) sous la forme d'une ceinture qui est disposée sur un côté externe dans la direction radiale de la première couche (30) faisant office de rembourrage, la première couche non renforcée (30) faisant office de rembourrage possédant une épaisseur radiale qui se situe dans une plage qui va de 2,0 mm à 10,0 mm, **caractérisé en ce que** le paquet de ceintures (20) comprend en outre une deuxième couche non renforcée (32) faisant office de rembourrage qui est disposée sur un côté externe dans la direction radiale de la couche de protection (28) sous la forme d'une ceinture et sur un côté interne dans la direction radiale de la portion faisant office de bande de roulement ou de la couche faisant office de bande de roulement (18), et **en ce que** la deuxième couche (32) faisant office de rembourrage possède une épaisseur qui se situe dans une plage allant de 1,0 mm à 4,0 mm.

2. Bandage pneumatique du type à nappe radiale tel qu'indiqué à la revendication 1, dans lequel la couche principale (26) sous la forme d'une ceinture possède un certain nombre de câblés constitués par des fibres organiques, de préférence des câblés fusionnés ou hybrides, et/ou dans lequel la couche de protection (28) sous la forme d'une ceinture possède un certain nombre de câblés constitués par des fibres organiques, de préférence des câblés fusionnés ou hybrides.

3. Bandage pneumatique du type à nappe radiale tel qu'indiqué à la revendication 1 ou 2, dans lequel la deuxième couche (32) faisant office de rembourrage possède une épaisseur qui se situe dans une plage qui va de 1,5 mm à 2,5 mm et/ou la première couche (30) faisant office de rembourrage possède une épaisseur ou une épaisseur minimale qui se situe dans une plage qui va de 2,0 mm à 10,0 mm.

4. Bandage pneumatique du type à nappe radiale tel qu'indiqué dans au moins une des revendications précédentes, dans lequel la couche (16) faisant office de carcasse possède des câblés constitués par des fibres organiques.

5. Bandage pneumatique du type à nappe radiale tel qu'indiqué dans au moins une des revendications précédentes, dans lequel la couche principale (26) sous la forme d'une ceinture possède une première largeur axiale (36) et la couche de protection (28) sous la forme d'une ceinture possède une deuxième largeur axiale (38), un rapport entre la deuxième largeur axiale et la première largeur axiale allant de 0,70 à 0,95 ou de 0,75 à 0,95 ou de 0,85 à 0,95.

6. Bandage pneumatique du type à nappe radiale tel qu'indiqué dans au moins une des revendications précédentes 1 à 4, dans lequel la couche principale (26) sous la forme d'une ceinture possède une première largeur axiale (36) et la couche de protection (28) sous la forme d'une ceinture possède une deuxième largeur axiale (38), un rapport entre la deuxième largeur axiale et la première largeur axiale allant de 1,01 à 1,08 ou de 1,01 à 1,05.

7. Bandage pneumatique du type à nappe radiale tel qu'indiqué dans au moins une des revendications précédentes, dans lequel un câblé de la nappe principale (26) sous la forme d'une ceinture, constitué par des fibres organiques, possède un angle d'inclinaison qui se situe dans une plage qui va de 1 degré à 45 degrés par rapport au plan équatorial du bandage pneumatique (10) du type à nappe radiale et/ou dans lequel un câblé de la couche de protection (28) sous la forme d'une ceinture, constitué par des fibres organiques, possède un angle d'inclinaison qui se situe dans une plage qui va de 0 degré à 25 degrés par rapport au plan équatorial du bandage pneumatique (10) du type à nappe radiale.

8. Bandage pneumatique du type à nappe radiale tel qu'indiqué dans au moins une des revendications précédentes, dans lequel un câblé de la couche principale (26) sous la forme d'une ceinture, constitué par des fibres organiques, possède un premier angle d'inclinaison par rapport au plan équatorial du bandage pneumatique (10) du type à nappe radiale, un câblé de la couche de protection (28) sous la forme d'une ceinture, constitué par des fibres organiques, possède un deuxième angle d'inclinaison par rapport au plan équatorial du bandage pneumatique (10) du type à nappe radiale, et dans lequel le premier angle est supérieur au deuxième angle.

9. Bandage pneumatique du type à nappe radiale tel qu'indiqué dans au moins une des revendications précédentes, dans lequel un câblé de la couche principale (26) sous la forme d'une ceinture, constitué par des fibres organiques englobe de l'aramide et un câblé de la couche de protection (28) sous la forme d'une ceinture, constitué par des fibres organiques englobe du nylon.

10. Bandage pneumatique du type à nappe radiale tel qu'indiqué dans au moins une des revendications précédentes, dans lequel la couche (16) faisant office de carcasse comprend des câblés fusionnés ou hybrides qui englobent des fibres à base de polyamide aromatique et des fibres à base de polyamide aliphatique.

11. Bandage pneumatique du type à nappe radiale tel qu'indiqué dans au moins une des revendications précédentes, dans lequel un câblé de la nappe principale (26) sous la forme d'une ceinture, constitué par des fibres organiques, possède un angle d'inclinaison qui se situe dans une plage qui va de 0 degré à 25 degrés par rapport au plan équatorial du bandage pneumatique (10) du type à nappe radiale.

12. Bandage pneumatique du type à nappe radiale tel qu'indiqué dans au moins une des revendications précédentes, dans lequel un câblé de la couche de protection (28) sous la forme d'une ceinture, constitué par des fibres organiques, possède un angle d'inclinaison qui se situe dans une plage qui va de 0 degré à 20 degrés par rapport au plan équatorial du bandage pneumatique (10) du type à nappe radiale.

13. Bandage pneumatique du type à nappe radiale tel qu'indiqué dans au moins une des revendications précédentes, dans lequel un câblé de la nappe principale (26) sous la forme d'une ceinture, constitué par des fibres organiques, possède un premier angle d'inclinaison par rapport au plan équatorial du bandage pneumatique (10) du type à nappe radiale, un câblé de la couche de protection (28) sous la forme d'une ceinture, constitué par des fibres organiques, possède un deuxième angle d'inclinaison par rapport au plan équatorial du bandage pneumatique (10) du type à nappe radiale, et dans lequel le premier angle est égal au deuxième angle.

14. Bandage pneumatique du type à nappe radiale tel qu'indiqué dans au moins une des revendications précédentes, dans lequel le bandage pneumatique (10) représente un bandage pneumatique destiné à un aéroplane.

15. Bandage pneumatique du type à nappe radiale selon la revendication 14, dans lequel la couche principale (26) sous la forme d'une ceinture est constituée par un certain nombre de nappes de ceinture, de préférence par un nombre de 2 à 16 ou de 6 à 12 nappes de ceinture.
